(19) Europäisches Patentamt
European Patent Office
Office européen des brevets

(11) **EP 4 631 607 A1**

(12) # EUROPEAN PATENT APPLICATION
published in accordance with Art. 153(4) EPC

(43) Date of publication:
**15.10.2025 Bulletin 2025/42**

(21) Application number: 23900235.5

(22) Date of filing: 07.08.2023

(51) International Patent Classification (IPC):
**B01D 63/10** (2006.01)   **B01D 69/00** (2006.01)
**B01D 69/10** (2006.01)   **B01D 69/12** (2006.01)
**B01D 71/56** (2006.01)   **B32B 3/24** (2006.01)
**C02F 1/44** (2023.01)

(52) Cooperative Patent Classification (CPC):
**B01D 63/10; B01D 69/00; B01D 69/10;
B01D 69/12; B01D 71/56; B32B 3/266; C02F 1/44;**
Y02A 20/131

(86) International application number:
**PCT/JP2023/028734**

(87) International publication number:
**WO 2024/122107 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 08.12.2022 JP 2022196267

(71) Applicant: **Nitto Denko Corporation
Ibaraki-shi, Osaka 567-8680 (JP)**

(72) Inventors:
• **MIYABE, Tomotsugu**
  **Ibaraki-shi, Osaka 567-8680 (JP)**
• **HIRABARA, Atsuki**
  **Ibaraki-shi, Osaka 567-8680 (JP)**
• **YAMAGUCHI, Taisuke**
  **Ibaraki-shi, Osaka 567-8680 (JP)**

(74) Representative: **Cabinet Beau de Loménie
103, rue de Grenelle
75340 Paris Cedex 07 (FR)**

(54) **COMPOSITE SEMIPERMEABLE MEMBRANE, AND SPIRAL-TYPE MEMBRANE ELEMENT**

(57) It is an object of the present invention to provide a composite semipermeable membrane capable of improving both rejection performance against organic compounds and a water permeability by controlling the microscopic surface area of a separation functional layer with an index different from the conventional one, and a spiral membrane element using the same. A composite semipermeable membrane 1 of the present invention includes a porous support 1b and a separation functional layer 1a formed of a polyamide-based resin on the porous support 1b, wherein the separation functional layer 1a has a surface roughness Ra1 of 90 to 150 nm when an area of 5 $\mu$m $\times$ 5 $\mu$m is measured in water by an atomic force microscope (AFM).

[Fig.1]

EP 4 631 607 A1

# EP 4 631 607 A1

**Description**

TECHNICAL FIELD

The present invention relates to a composite semipermeable membrane including a porous support and a separation functional layer, and a spiral membrane element (hereinafter, may be abbreviated as a "membrane element") using the same.

BACKGROUND ART

A composite semipermeable membrane is called an RO (reverse osmosis) membrane, an NF (nano-filtration) membrane, or an FO (forward osmosis) membrane or the like depending on the filtration properties or treatment methods, and is usable for the production of ultrapure water, seawater desalination, desalinization of brackish water, and reuse of wastewater, and the like. In recent years, as a composite semipermeable membrane used for the production of drinking water, particularly overseas, there is an increasing demand for a composite semipermeable membrane excellent in rejection performance against organic compounds (for example, molecular weight: 150 to 250) such as herbicides and odor components and a water permeability when removing the organic compounds.

At present, an NF membrane called a partially desalted loose type, which causes inorganic salts to permeate more easily than an RO membrane used for a desalination treatment, is commercially available, and its application to the use of the production of drinking water as described above is being studied. However, the commercially available partially desalted loose type NF membrane has problems that the membrane has an insufficient water permeability even when the membrane is excellent in rejection performance against organic compounds such as herbicides and odor components, or the membrane has insufficient rejection performance against the organic compounds even when the membrane is excellent in a water permeability.

That is, the rejection performance against organic compounds and the water permeability are in a trade-off relationship, and in particular, in the use of the production of drinking water, the treatment amount is large, and therefore it is currently difficult to obtain a composite semipermeable membrane achieving both rejection performance and a water permeability although energy saving is important.

Meanwhile, as a composite semipermeable membrane commonly used industrially, a composite semipermeable membrane is known, in which a skin layer containing a polyamide-based resin obtained by reacting a polyfunctional amine component with a polyfunctional acid halide component is formed as a separation functional layer on the surface of a porous support. For such a composite semipermeable membrane, a method is known, in which fine irregularities are provided in the separation functional layer to increase the surface area, thereby improving the water permeability while maintaining the rejection performance.

For example, Patent Document 1 discloses a method for producing a composite reverse osmosis membrane, in which when a solution A containing a polyfunctional amine component and a solution B containing a polyfunctional acid halide component are brought into contact with each other to form a skin layer on a microporous support, a compound having a solubility parameter of 8 to 14 $(cal/cm^3)^{1/2}$ is present in the solution A or the solution B, so that the skin layer has an average surface roughness of 55 nm or more. In this document, it can be said that the average surface roughness of the skin layer is calculated using a value measured in the atmosphere using an atomic force microscope (AFM).

PRIOR ART DOCUMENTS

PATENT DOCUMENT

Patent Document 1: JP-A-09-85068

SUMMARY OF THE INVENTION

PROBLEMS TO BE SOLVED BY THE INVENTION

However, according to the study of the present inventors, it has been found that in the surface roughness measured in the atmosphere using the atomic force microscope (AFM), particularly when the size of the fine irregularities of the separation functional layer is a certain level or more, it is difficult to obtain the correlation with the water permeability. That is, the size of the fine irregularities of the separation functional layer in a state of being actually used for membrane separation tends to be different from the surface roughness of the separation functional layer measured in the atmosphere, and it has been found that there is a limit to a method for improving the water permeability by controlling the size (that is, microscopic surface area) of the fine irregularities of the separation functional layer using the trend as an index.

Therefore, an object of the present invention is to provide a composite semipermeable membrane capable of improving both rejection performance against organic compounds and a water permeability by controlling the microscopic surface area of a separation functional layer with an index different from the conventional one, and a spiral membrane element using the same.

MEANS FOR SOLVING THE PROBLEMS

As a result of intensive studies to solve the above problems, the present inventors have found that the size of the fine irregularities of a separation functional layer can be accurately controlled by using a surface roughness Ra1 measured by an atomic force microscope (AFM) in water as an index, and when the surface roughness Ra1 falls within a predetermined range, both rejection performance against organic compounds and a water permeability can be improved, thereby completing the present invention. That is, the present invention includes the following aspects.

[1] A composite semipermeable membrane including: a porous support; and a separation functional layer formed of a polyamide-based resin on the porous support,
wherein the separation functional layer has a surface roughness Ra1 of 90 to 150 nm when an area of 5 $\mu$m$\times$ 5 $\mu$m is measured in water by an atomic force microscope (AFM).

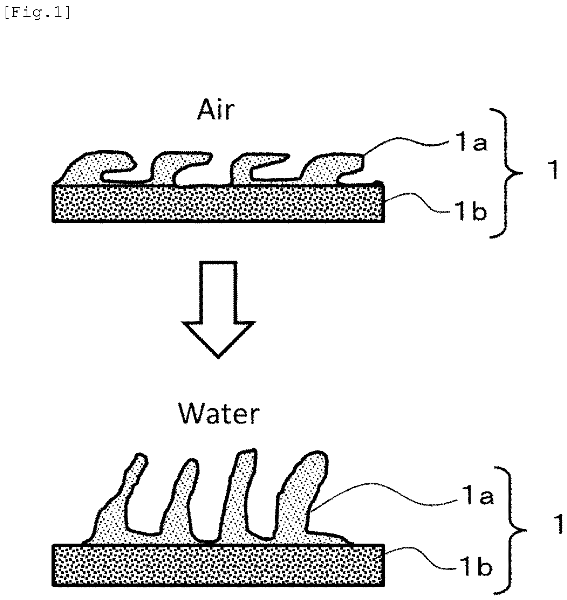

According to the composite semipermeable membrane of the present invention, by using the surface roughness Ra1 measured in water as an index, the size of the fine irregularities of the separation functional layer in a state close to that actually used for membrane separation can be measured, and by controlling the size within a predetermined range, the water permeability can be improved by increasing the microscopic surface area without deteriorating the rejection performance against organic compounds. That is, as shown in Fig. 1, a separation functional layer 1a formed on a porous support 1b of a composite semipermeable membrane 1 in the atmosphere tends to be observed as a state where the fine irregularities of the separation functional layer 1a lie down or deform down as compared with a state where the separation functional layer is actually used for membrane separation. By using the surface roughness Ra1 measured in water as an index, the size of the fine irregularities of the separation functional layer in a state close to that where the separation functional layer is actually used for membrane separation can be more accurately measured.

[2] The composite semipermeable membrane according to [1], wherein the polyamide-based resin contains a constituent derived from m-phenylenediamine.

When the polyamide-based resin contains a constituent component derived from m-phenylenediamine, a structure in which benzene rings are densely disposed is easily obtained, and a rejection against organic compounds is easily adjusted to a certain value or more.

[3] The composite semipermeable membrane according to [1] or [2], wherein in the separation functional layer, a ratio: R=Ra1/Ra2 of the surface roughness Ra1 to a surface roughness Ra2 when an area of 5 $\mu$m $\times$ 5 $\mu$m is measured by the atomic force microscope (AFM) in the atmosphere is 1.6 or more.

When the ratio: R=Ra1/Ra2 is 1.6 or more, a difference from the value measured in the atmosphere increases to some extent, and thus it is more effective to use the surface roughness Ra1 as an index. That is, by using the surface roughness Ra1 measured in water as an index, the size of the fine irregularities of the separation functional layer in a state close to that actually used for membrane separation can be more appropriately measured as compared with the case of measurement in the atmosphere.

[4] The composite semipermeable membrane according to any one of [1] to [3], wherein a rejection of atrazine is 95.0% or more.

By setting such a rejection of atrazine, the rejection performance against organic compounds (for example, molecular weight: 150 to 250) such as herbicides and odor components can be made sufficient.

[5] The composite semipermeable membrane according to any one of [1] to [4], having a water permeability of 9.0 LMH/bar or more when evaluated using model water simulated with river water.

When the water permeability against the model water is in this range, it is easy to achieve both rejection performance against the organic compounds and a water permeability having a trade-off relationship.

[6] A spiral membrane element including the composite semipermeable membrane according to any one of [1] to [5].

Since the spiral membrane element of the present invention includes the composite semipermeable membrane of the present invention as described above, it is possible to provide a spiral membrane element capable of improving both rejection performance against organic compounds and a water permeability by controlling the microscopic surface area of the separation functional layer with an index different from the conventional one.

EFFECT OF THE INVENTION

The present invention can provide a composite semipermeable membrane and a spiral membrane element capable of improving both rejection performance against organic compounds and a water permeability by controlling the microscopic surface area of the separation functional layer with an index different from the conventional one.

BRIEF DESCRIPTION OF THE DRAWINGS

Fig. 1 is a conceptual diagram schematically showing a difference between a separation functional layer of a composite semipermeable membrane in the atmosphere and the separation functional layer of the composite semipermeable membrane in water.
Fig. 2 is a partially cutaway perspective view showing an example of a spiral membrane element.

MODE FOR CARRYING OUT THE INVENTION

Hereinafter, embodiments of the present invention will be described.

(Composite semipermeable membrane)

A composite semipermeable membrane of the present invention includes a porous support and a separation functional layer formed of a polyamide-based resin on the porous support, wherein the separation functional layer has a surface roughness Ra1 of 90 to 150 nm when an area of $5 \, \mu m \times 5 \, \mu m$ is measured in water by an atomic force microscope (AFM).

Examples of the separation functional layer include a separation functional layer capable of separating a monovalent inorganic ion, a monovalent organic ion, a divalent inorganic ion, a divalent organic ion, an organic compound having a molecular weight of 100 to 150, an organic compound having a molecular weight of 150 to 250, an organic compound having a molecular weight of more than 250, and the like according to the size of a solute to be separated and the like. For any of these, by using the surface roughness Ra1 measured in water as an index, the size of the fine irregularities of the separation functional layer in a state close to that actually used for membrane separation can be measured, and by controlling the size within a predetermined range, the water permeability of the separation functional layer can be improved by increasing the microscopic surface area without deteriorating the rejection performance.

In particular, in recent years, as a composite semipermeable membrane used for the production of drinking water overseas, there is an increasing demand for a composite semipermeable membrane excellent in rejection performance against organic compounds (for example, molecular weight: 150 to 250) such as herbicides and odor components and a water permeability when removing the organic compounds, and the composite semipermeable membrane of the present invention is particularly effective as a separation membrane for use in removing such organic compounds.

As a material for forming the separation functional layer, a polyamide-based resin capable of forming the separation functional layer by interfacial polymerization and controlling the size of the fine irregularities of the separation functional layer at that time is used. The separation functional layer formed of the polyamide-based resin is particularly preferably a separation functional layer containing a polyamide-based resin obtained by polymerizing a polyfunctional amine component and a polyfunctional acid halogen component.

The polyfunctional amine component is a polyfunctional amine having two or more reactive amine groups. Examples thereof include aromatic, aliphatic, and alicyclic polyfunctional amines.

Examples of the aromatic polyfunctional amines include m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine.

Examples of the aliphatic polyfunctional amines include ethylenediamine, propylenediamine, tris(2-aminoethyl) amine, and N-phenyl-ethylenediamine.

Examples of the alicyclic polyfunctional amines include 1,3-diaminocyclohexane, 1,2-diaminocyclohexane, 1,4-diaminocyclohexane, piperazine, 2,5-dimethylpiperazine, and 4-aminomethylpiperazine.

These polyfunctional amines may be used singly or in any combination of two or more thereof. In order to obtain a separation functional layer having high salt-rejection performance, it is preferred to use an aromatic polyfunctional amine.

In particular, m-phenylenediamine is preferably used as the polyfunctional amine component, and is preferably used in an amount of 20 to 100 mol%, more preferably 50 to 100 mol%, and most preferably 100 mol% in the polyfunctional amine component, from the viewpoint that a rejection against organic compounds having a molecular weight of 150 to 250 is easily adjusted to a certain level or more. Thus, the separation functional layer can be formed of the polyamide-based resin containing the constituent component derived from m-phenylenediamine.

The polyfunctional acid halide component is a polyfunctional acid halide having two or more reactive carbonyl groups. Examples of the polyfunctional acid halide include aromatic, aliphatic, and alicyclic polyfunctional acid halides.

Examples of the aromatic polyfunctional acid halides include trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, and chlorosulfonylbenzene dicarboxylic acid dichloride.

Examples of the aliphatic polyfunctional acid halides include propanedicarboxylic acid dichloride, butanedicarboxylic acid dichloride, pentanedicarboxylic acid dichloride, propanetricarboxylic acid trichloride, butanetricarboxylic acid trichloride, pentanetricarboxylic acid trichloride, glutaryl halides, and adipoyl halides.

Examples of the alicyclic polyfunctional acid halides include cyclopropanetricarboxylic acid trichloride, cyclobutanetetracarboxylic acid tetrachloride, cyclopentanetricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, and tetrahydrofurandicarboxylic acid dichloride.

These polyfunctional acid halides may be used singly or in any combination of two or more thereof. In order to obtain a separation functional layer having high salt-rejection performance, it is preferred to use an aromatic polyfunctional acid halide. It is also preferred to use, as at least one component of the polyfunctional acid halide components, a polyfunctional acid halide having tri or higher polyfunctionalities to form a crosslinked structure.

In particular, trimesic acid trichloride is preferably used as the polyfunctional acid halide component, and is preferably used in an amount of 20 to 100 mol%, more preferably 50 to 100 mol%, and most preferably 100 mol% in the polyfunctional acid halide component, from the viewpoint that the rejection against organic compounds having a molecular weight of 150 to 250 is easily adjusted to a certain value or more. Thus, the separation functional layer can be formed of the polyamide-based resin containing the constituent component derived from trimesic acid chloride.

In order to improve the performance of the separation functional layer containing a polyamide-based resin, a polymer such as polyvinyl alcohol, polyvinylpyrrolidone, or polyacrylic acid, and a polyhydric alcohol such as sorbitol or glycerin, and the like may be copolymerized.

The porous support that supports the separation functional layer is not particularly limited as long as the porous support can support the separation functional layer. Usually, an ultrafiltration membrane having micro pores having an average pore diameter of about 10 to 500 Å is preferably used. Examples of materials for forming the porous support include various materials such as polysulfones; polyarylether sulfones (for example, polyether sulfone); polyimides; polyetherimides; and polyvinylidene fluorides. Polysulfones and polyarylether sulfones are particularly preferably used from the viewpoint of being chemically, mechanically, and thermally stable.

The thickness of such a porous support is usually about 25 to 125 μm, and preferably about 40 to 75 μm, and is not necessarily limited thereto. The porous support is preferably reinforced by backing with a base material such as a woven fabric or a nonwoven fabric.

Methods for forming the separation functional layer containing the polyamide-based resin on the surface of the porous support are not particularly limited, and any known methods may be used. Examples thereof include an interfacial condensation method, a phase separation method, and a thin membrane coating method. Specifically, the interfacial condensation method is a method in which a separation functional layer is formed by bringing an aqueous amine solution containing a polyfunctional amine component into contact with an organic solution containing a polyfunctional acid halide component to perform interfacial polymerization, and the separation functional layer is placed on a porous support, or a method in which a separation functional layer of a polyamide-based resin is directly formed on a porous support by the interfacial polymerization on the porous support. The conditions and the like of the interfacial condensation method are described in detail in JP-A-S58-24303 and JP-A-H01-180208 and the like, and these known techniques can be appropriately adopted.

The separation functional layer formed on the porous support has fine irregularities, and the degree of the size of the irregularities can be measured using a surface roughness Ra1 when an area of 5 μm × 5 μm is measured in water by an atomic force microscope (AFM) as an index.

In the present invention, from the viewpoint of improving a water permeability while maintaining rejection performance, the surface roughness Ra1 is preferably 90 nm or more, more preferably 95 nm or more, still more preferably 100 nm or more, and particularly preferably 105 nm or more.

From the viewpoint of prevention of occurrence of defects, durability, and the like, the surface roughness Ra1 is preferably 150 nm or less, more preferably 140 nm or less, still more preferably 130 nm or less, and particularly preferably 125 nm or less.

The degree of the size of the fine irregularities of the separation functional layer can be known to some extent also by a surface roughness Ra2 when an area of 5 μm × 5 μm is measured by an atomic force microscope (AFM) in the atmosphere, but as compared with that case, the size of the fine irregularities of the separation functional layer in a state close to that actually used for membrane separation can be more appropriately measured by using the surface roughness Ra1 measured in water as an index.

Therefore, as the ratio: R=Ra1/Ra2 increases, a difference between the value Ra1 measured in water and the value Ra2 measured in the atmosphere increases. Therefore, when the ratio: R=Ra1/Ra2 is preferably 1.6 or more, more preferably 1.7 or more, and more preferably 1.8 or more, it is more effective to control the surface roughness using the surface roughness Ra1 as an index in the present invention. When the ratio: R=Ra1/Ra2 becomes too large, the deformation of the irregularities in water and the atmosphere becomes too large, and thus the ratio: R=Ra1/Ra2 is preferably 3.0 or less, more preferably 2.5 or less, and still more preferably 2.0 or less.

In the present specification, the surface roughness Ra1 measured in water and the surface roughness Ra2 measured in the atmosphere mean a plane surface roughness Ra defined by the following formula (Math 1).

[Math 1]

Average surface roughness: Ra

$$Ra = \frac{1}{S} \int_0^a \int_0^b | f(x, y) - z_0 | \, dx \, dy$$

The plane surface roughness can be calculated using a value measured using an atomic force microscope (AFM). The average surface roughness (Ra) is calculated by expanding to three-dimension in order that a center line average roughness Ra defined in JIS B0601 is applicable to a measured surface, and is a value obtained by averaging absolute values of deviations of a reference surface to a specified surface. Here, the measured surface refers to a surface shown by all of measured data. The specified surface is a surface to be subjected to roughness measurement, and refers to a specific portion (specified area: 5 $\mu$m$\times$5 $\mu$m) specified by a clip in the measured surface. The reference surface refers to a plane represented by $Z=Z_0$ when the average value of heights of the specified surface is $Z_0$.

A method for producing a composite semipermeable membrane in which the surface roughness Ra2 measured in the atmosphere can be adjusted is described in JP H09-85068 A, JP H07-8770 A, and the like, and according to such a production method, also in the present invention, the surface roughness Ra1 can be adjusted while the surface roughness Ra1 measured in water is confirmed.

In particular, in a method for producing a composite semipermeable membrane by forming a polyamide-based skin layer (separation functional layer) by means including a step of coating a porous support with a solution A containing a polyfunctional amine component and a step of bringing a solution B containing a polyfunctional acid halogen component into contact with the solution A phase, it is preferable to add a surface adjusting agent such as an alkanolamine compound, an alkyl ketone compound, or an alkyl ester compound to the solution A.

Examples of the alkanolamine compound include ethanolamine, methanolamine, propanolamine, and butanolamine, and any of monoalkanolamine, dialkanolamine, and trialkanolamine may be used. A hydrogen atom bonded to a nitrogen atom of the alkanolamine compound may be substituted with an alkyl group, an alkenyl group, an alkynyl group, or a phenyl group or the like. Among them, monoethanolamine, diethanolamine, and triethanolamine are preferable, and monoethanolamine and triethanolamine are more preferable.

Examples of the alkyl ketone compound include acetone, diisopropyl ketone, and cyclohexanone, and examples of the alkyl ester compound include ethyl acetate, propyl acetate, and butyl acetate.

The concentration of the surface adjusting agent is preferably 0.1 to 10.0% by mass, and more preferably 1.0 to 5.0% by mass in the solution A, from the viewpoint of producing the composite semipermeable membrane having a surface roughness Ra1 as described above.

The surface roughness Ra1 can also be adjusted by the difference in solubility parameter between the solution A and the solution B and the solubility parameter of the compound added to the solution A and/or the solution B. When a composite semipermeable membrane having a surface roughness Ra1 as described above is produced, a compound having a solubility parameter of 8 to 17 $(cal/cm^3)^{1/2}$ is preferably present in at least one selected from the solution A, the solution B, and the microporous support.

Examples of a solubility parameter adjusting agent include alcohols such as ethanol, propanol, butanol, and pentanol, and nitrogen compounds such as ethylamine, triethylamine, and n-butylamine. The solubility parameter can also be adjusted depending on the types and concentrations of the polyfunctional amine component and the polyfunctional acid halogen component to be used.

In order to improve the salt-rejection property, a water permeability, and antioxidant resistance and the like of the composite semipermeable membrane, various conventionally known treatments may be applied to the composite semipermeable membrane.

(Spiral membrane element)

The spiral membrane element of the present invention is characterized by having a composite semipermeable membrane as described above, and any configuration of a conventional membrane element can be adopted for portions other than the composite semipermeable membrane.

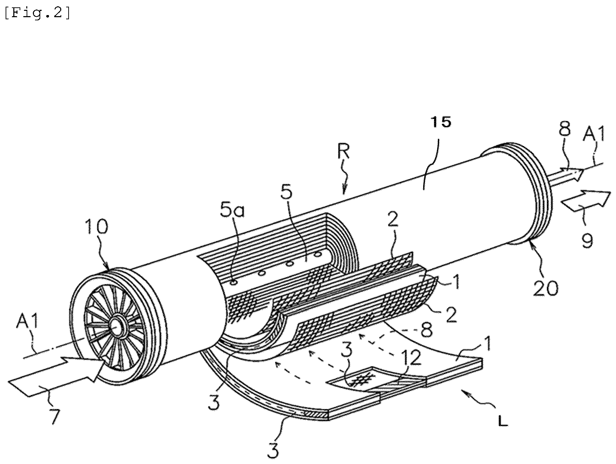

For example, as shown in Fig. 2, the spiral membrane element of the present invention includes a perforated central pipe 5 and a roll R wound around the central pipe 5 and including a separation membrane 1.

In the example shown in Fig. 2, the membrane element includes a plurality of membrane leaves L in each of which a permeation-side flow-channel member 3 is interposed between separation membranes 1 opposed to each other; a supply-side flow-channel member 2 interposed between any two of the membrane leaves L; a perforated central pipe 5 around which the membrane leaves L and the supply-side flow-channel members 2 are wound; and a sealing part 12 for preventing the mixing of supply-side flow-channels with permeation-side flow-channels. In this case, the permeation-side flow-channel in the membrane leaves L can be formed by the permeation-side flow-channel member 3 (also referred to as a permeation-side spacer).

It is also possible to form the supply-side flow-channel and/or the permeation-side flow-channel in the separation membrane 1 itself by providing irregularities or grooves or the like on the surface of the separation membrane 1. In this case, it is possible to omit the supply-side flow-channel member 2 and/or the permeation-side flow-channel member 3.

Fig. 2 shows an example in which the sealing part includes a both-end sealing part and an outer circumferential-side sealing part 12. In the sealing parts, the both-end sealing part is obtained by using an adhesive to seal ends of two sides of each of the membrane leaves L on both sides of the leaf in an axial direction A1. The outer circumferential-side sealing part 12 is obtained by using an adhesive to seal ends of the outer circumferential-side tip of each of the membrane leaves L. An area surrounded by the separation membranes 1 facing each other, the both-end sealing part, and the outer circumferential-side sealing part 12 serves as the permeation-side flow-channel. This communicates with an opening 5a of the central pipe 5.

It is preferable to have a central side sealing part in which the perforated central pipe 5 and the base end side of the both end sealing parts of the membrane leaf L are sealed with an adhesive. The membrane element includes the roll R in which the membrane leaf L and the supply-side flow-channel member 2 are wound around the central pipe 5 with such a central-side sealing part interposed therebetween. The adhesive is not particularly limited, and any conventionally known adhesive such as a urethane-based adhesive or an epoxy-based adhesive can be used.

A first end member 10 having a function of a seal carrier or the like may be provided on the upstream side of the roll R of the membrane element, and a second end member 20 having a function of an anti-telescoping device or the like may be provided on the downstream side.

In a typical spiral membrane element having a diameter of 8 inches, about 15 to 30 sets of membrane leaves L are wound. When the membrane element is used, the membrane element is accommodated in a pressure vessel (vessel), and a supply liquid 7 is supplied from one end surface side of the membrane element. The supplied supply liquid 7 flows along the supply-side flow-channel members 2 into a direction parallel with the axial direction A1 of the central pipe 5, and is then discharged as a concentrated liquid 9 from the other end surface side of the membrane element. In the process in which the supply liquid 7 flows along the supply-side flow-channel members 2, a permeation liquid 8 which has permeated through the separation membranes 1 flows along the permeation-side flow-channel members 3, then flows into the central pipe 5 from the opening 5a, and is discharged from the end of the central pipe 5.

The supply-side flow-channel member 2 generally has a function of ensuring spaces, the spaces being for uniformly supplying a fluid onto a membrane plane. The supply-side flow-channel member 2 to be used may be, for example, a net, a knitted fabric, or a sheet worked to have irregularities. Such a member that has a maximum thickness of about 0.1 to 3 mm can be appropriately used if necessary. When the flow-channel member is set on each of both surfaces of the separation membrane 1, two different flow-channel members are generally used: one thereof is used, on the supply liquid side, as the supply-side flow-channel member 2, and the other is used, on the permeation liquid side, as the permeation-side flow-channel member 3. In the supply-side flow-channel member 2, a thick network flow-channel member having large meshes is used, and in the permeation-side flow-channel member 3, a woven fabric or knitted fabric channel member having fine meshes is preferably used.

When an RO membrane or an NF membrane is used for the purpose of, for example, seawater desalination or waste water treatment, each of the permeation-side flow-channel members 3 is located to be interposed between any opposed two of the separation membranes 1 in the membrane leaves L. The permeation-side flow-channel member 3 is required to support the separation membranes from the back sides of the membranes against pressure applied to the membrane, and further to ensure flow-channels for permeation liquid 8.

In order to ensure such a function, the permeation-side flow-channel member 3 is preferably formed of a tricot knitted fabric, and more preferably a tricot knitted fabric subjected to resin impregnation reinforcement or fusion treatment after the formation of the knitted fabric.

As the separation membrane 1, the composite semipermeable membrane of the present invention described above is used. That is, a spiral membrane element of the present invention includes a composite semipermeable membrane including a porous support and a separation functional layer formed of a polyamide-based resin on the porous support, wherein the separation functional layer has a surface roughness Ra1 of 90 to 150 nm when an area of 5 μm × 5 μm is measured in water by an atomic force microscope (AFM).

In the case of a typical spiral membrane element, an exterior member 15 is provided on the outer periphery of the roll R. The exterior member 15 is not particularly limited, and examples thereof include various sheets, films, and tapes. If necessary, a fiber reinforced resin (FRP) or the like is used for reinforcement. As a method for forming the fiber reinforced resin, a method for winding a roving in which a fiber is impregnated with a curable resin around the outer periphery of the roll R is preferable.

(Use)

The composite semipermeable membrane may be referred to as a reverse osmosis (RO) membrane, a nanofiltration (NF) membrane, a partially desalted loose type NF membrane, or a selective separation type NF membrane depending on the size of a solute to be separated, and the composite semipermeable membrane of the present invention can be applied to any type of separation membrane. In particular, in recent years, as a composite semipermeable membrane used for the production of drinking water overseas, there is an increasing demand for a composite semipermeable membrane excellent in rejection performance against organic compounds (for example, molecular weight: 150 to 250) such as herbicides and odor components and a water permeability when removing the organic compounds, and the composite semipermeable membrane of the present invention is particularly effective as a separation membrane for use in removing such organic compounds.

The same applies to the use as the spiral separation membrane element, but the composite semipermeable membrane can also be used for other uses. For example, the composite semipermeable membrane is suitable for production of ultrapure water, and desalination of brackish water or sea water, and the like, and can remove and recover pollution sources or effective substances from contamination or the like which causes pollution such as dyeing wastewater or electrodeposition coating material wastewater to contribute to closing of the wastewater. The spiral separation membrane can be used for advanced treatments such as concentration of active ingredients in food uses and the like, and removal of harmful ingredients in water purification and sewage uses and the like. The spiral separation membrane can also be used for wastewater treatment in oil fields and shale gas fields and the like.

Examples

Hereinafter, the present invention will be described with reference to Examples, but the present invention is not limited to these Examples. In Examples and the like, physical properties and the like were measured or evaluated by the following methods. The physical property values and the like in the present invention are specifically values measured by the following methods.

(1) Surface roughness Ra2 by AFM measurement in atmosphere

The prepared composite semipermeable membrane was measured using a composite semipermeable membrane obtained after a drying step. For a commercially available product, an element was washed with water, the composite semipermeable membrane was taken out from the element, and then the composite semipermeable membrane dried at 25°C for 12 hours or more was used for the measurement.

A surface roughness Ra defined by the above formula (Math 1) was calculated using a value measured using an atomic force microscope (AFM) (AFM5300E manufactured by Hitachi High-Tech Science Corporation). An average surface roughness (Ra) is calculated by expanding to three-dimension in order that a center line average roughness (Ra) which is defined in JIS B0601 is applicable to a measured surface. The average surface roughness is the average value of absolute values of deviation of a reference surface to a specified surface. Here, the measured surface refers to a surface shown by all of measured data. The specified surface is a surface to be subjected to roughness measurement, and refers to a specific portion (specified area: 5 μm×5 μm) specified by a clip in the measured surface. The reference surface refers to a plane represented by $Z=Z_0$ when the average value of heights of the specified surface is $Z_0$. AFM measurement in the atmosphere was performed for each of three samples, and the average value of the surface roughnesses Ra2 was determined.

(2) Surface roughness Ra1 by AFM measurement in water

For the prepared composite semipermeable membrane, the composite semipermeable membrane obtained after the drying step is hydrophilized, and then the membrane immersed in ultrapure water was used for measurement. For a commercially available product, the element was washed with water, the composite semipermeable membrane was taken out from the element, and then the composite semipermeable membrane immersed in ultrapure water was used for the measurement.

The surface shape was measured using an atomic force microscope (AFM) (AFM5300E manufactured by Hitachi High-Tech Science Corporation) in the same manner as described above except that AFM measurement in water was performed as follows instead of performing the AFM measurement in the atmosphere in (1) above.

The sample in a state of being immersed in ultrapure water was placed on a holder for in-liquid measurement in a state where the wet state of the sample was maintained as it was, and the holder for in-liquid measurement was filled with ultrapure water to perform the AFM measurement. The AFM measurement in water was performed for each of three samples, and the average value of the surface roughnesses Ra1 was determined.

The ratio R of the surface roughness Ra1 to the surface roughness Ra2 measured in the atmosphere was determined by R=Ra1/Ra2.

(3) Evaluation of rejection of atrazine

The prepared flat membrane-like composite semipermeable membrane was cut into a predetermined shape and size, and set in a cell (effective membrane surface area: 44.2cm$^2$) of a cross flow test system for flat membrane evaluation. An atrazine aqueous solution having a concentration of 1 ppm was caused to permeate the composite semipermeable membrane at an operation pressure of 0.5 MPa, a temperature of 25°C, and a pH of 6.5 for 30 minutes, and a rejection of atrazine was then measured. The concentration of each of a supply liquid and a permeation liquid was measured with a GC/MS analyzer (Agilent 5975 MSD manufactured by Agilent Technologies, Inc.), and the rejection of atrazine was calculated from the measurement result according to the following formula.

<Rejection of atrazine>

Rejection (%) = (1 - (concentration of atrazine in membrane permeation liquid/concentration of atrazine in supply liquid)) $\times$ 100

(4) Evaluation of water permeability using model water

The prepared flat membrane-like composite semipermeable membrane was cut into a predetermined shape and size, and set in a cell (effective membrane surface area: 44.2cm$^2$) of a cross flow test system for flat membrane evaluation. A pressure was adjusted so that a water permeation amount was 25 LMH (Lm$^{-2}$h$^{-1}$), and model water simulated with river water having the following composition at a concentration of 500 ppm was caused to permeate the composite semipermeable membrane at a temperature of 25°C and a pH of 6.5 for 30 minutes. Using a pressure at a lapse of 30 minutes (pressure after a lapse of 30 minutes) at that time, a water permeability was determined according to the following formula.

<Water permeability>

Water permeability (LMH/bar) = 25LMH/(pressure required to produce 25LMH)

<Composition of model water simulated with river water>

A composition having a concentration of 500 ppm, containing 2.50 g of sodium chloride (NaCl), 0.27 g of sodium nitrate (NaNO$_3$), 0.73 g of sodium silicate (SiO$_2$Na$_2$O), 9.10 g of sodium sulfate (Na$_2$SO$_4$), 5.33 g of magnesium chloride hexahydrate (MgCl$_2 \cdot$6H$_2$O), 5.83 g of magnesium sulfate heptahydrate (MgSO$_4 \cdot$7H$_2$O), 7.33 g of calcium chloride (CaCl$_2$), and 0.33 g of potassium chloride (KCl) in 50 L of pure water.

(Example 1)

An amine aqueous solution containing 2.5% by mass of m-phenylenediamine (MPD), 0.1% by mass of sodium dodecyl sulfate, 2.6% by mass of triethylamine, 1.7% by weight of monoethanolamine as a surface adjusting agent, 0.03% by mass of sodium hydroxide, 6% by mass of camphorsulfonic acid, 1.5% by weight of magnesium nitrate, and 4% by mass of isopropyl alcohol was applied to a polysulfone porous resin layer formed on a polyester nonwoven fabric, and then an excess amine aqueous solution was removed to form an aqueous solution coating layer.

Next, the surface of the aqueous solution coating layer was immersed for 7 seconds in an acid chloride solution in which 0.2% by mass of trimesic acid chloride (TMC) and 0.2% by mass of 2-methyl-2-butanol were dissolved in a naphthenic solvent (Exxsol D40 manufactured by Exxon Mobil Corporation). The excess solution on the surface of the aqueous solution coating layer was then removed. The aqueous solution coating layer was air-dried for 20 seconds, and held in a hot air dryer at 140°C for 3 minutes to form a separation functional layer containing a polyamide resin on the porous polysulfone support layer, thereby preparing a composite semipermeable membrane in which a non-woven substrate, a polysulfone porous support, and a polyamide separation functional layer were arranged in this order. The evaluation results are shown in Table 1.

(Example 2)

A composite semipermeable membrane was prepared under the same conditions as in Example 1 except that monoethanolamine as a surface adjusting agent was changed to diethanolamine in Example 1. The evaluation results are shown in Table 1.

(Example 3)

A composite semipermeable membrane was prepared under the same conditions as in Example 1 except that monoethanolamine as a surface adjusting agent was changed to triethanolamine in Example 1. The evaluation results are shown in Table 1.

(Example 4)

A composite semipermeable membrane was prepared under the same conditions as in Example 1 except that the content of monoethanolamine as a surface adjusting agent in Example 1 was changed to 2.0% by mass. The evaluation results are shown in Table 1.

(Comparative Example 1)

A composite semipermeable membrane was prepared under the same conditions as in Example 1 except that an amine aqueous solution was prepared so that the concentrations of other components were the same without using monoethanolamine as a surface adjusting agent in Example 1. The evaluation results are shown in Table 1.

(Comparative Example 2)

A composite semipermeable membrane obtained by decomposing and taking out a commercially available NF membrane element (NF90-400 manufactured by Dupont) was used. The evaluation results are shown in Table 1.

(Comparative Example 3)

A composite semipermeable membrane obtained by decomposing and taking out a commercially available NF membrane element (NF270-400 manufactured by Dupont) was used. The evaluation results are shown in Table 1.

[Table 1]

| | SURFACE ADJUSTING AGENT | CONTENT | AFM IN WATER: Ra1 | AFM IN ATMOSPHERE: Ra2 | RATIO: R=Ra1/Ra2 | REJECTION OF ATRAZINE | WATER PERMEABILITY |
|---|---|---|---|---|---|---|---|
| | | (% by mass) | (nm) | (nm) | (-) | (%) | (LMH/bar) |
| Example 1 | MONOETHANOLAMINE | 1.7 | 111 | 62 | 1.78 | 95.8 | 10.5 |
| Example 2 | DIETHANOLAMINE | 1.7 | 91 | 54 | 1.69 | 96.2 | 9.1 |
| Example 3 | TRIETHANOLAMINE | 1.7 | 120 | 64 | 1. 88 | 95.4 | 10.7 |
| Example 4 | MONOETHANOLAMINE | 2.0 | 125 | 65 | 1.92 | 95.2 | 10.9 |
| Comparative Example 1 | ABSENCE | 0 | 80 | 96 | 0.83 | 96.5 | 7.7 |
| Comparative Example 2 | (NF90-400) | | 52 | 31 | 1.67 | 95.5 | 7.9 |
| Comparative Example 3 | (NF270-400) | | 2 | 2 | 1.04 | 76.4 | 11.7 |

As shown in the results in Table 1, the surface roughness Ra1 measured by an atomic force microscope (AFM) in water and the surface roughness Ra2 measured in the atmosphere do not match, and the ratio of the surface roughness Ra1 and the surface roughness Ra2 varies greatly.

In Examples 1 to 4 in which the surface roughness Ra1 was a certain value or more, a high water permeability was obtained while the rejection of atrazine was maintained at 95.0% or more. In particular, when Comparative Example 1 and Example 2 were compared with each other, as compared with Comparative Example 1 in which the surface roughness Ra2 measured in the atmosphere was larger, Example 2 in which the surface roughness Ra1 measured in water was larger had a higher water permeability.

Meanwhile, in Comparative Example 1 in which the surface adjusting agent was not used, the surface roughness Ra1 was less than a certain value, and the rejection of atrazine was high, but the water permeability was insufficient. In Comparative Examples 2 and 3 using a commercially available product, the surface roughness Ra1 was small, and the rejection of atrazine or the water permeability was insufficient.

INDUSTRIAL APPLICABILITY

The present invention can provide a composite semipermeable membrane and a spiral membrane element capable of improving both rejection performance against organic compounds and a water permeability by controlling the microscopic surface area of the separation functional layer with an index different from the conventional one.

In particular, in recent years, as a composite semipermeable membrane used for the production of drinking water overseas, there is an increasing demand for a composite semipermeable membrane excellent in rejection performance against organic compounds (for example, molecular weight: 150 to 250) such as herbicides and odor components and a water permeability when removing the organic compounds, and the composite semipermeable membrane of the present invention is particularly effective as a separation membrane for use in removing such organic compounds.

DESCRIPTION OF REFERENCE SIGNS

1       Separation membrane
1a      Separation functional layer
1b      Porous support
5       Central pipe
A1      Axial direction
R       Roll

Claims

1.  A composite semipermeable membrane comprising: a porous support; and a separation functional layer formed of a polyamide-based resin on the porous support,
    wherein the separation functional layer has a surface roughness Ra1 of 90 to 150 nm when an area of 5 μm × 5 μm is measured in water by an atomic force microscope (AFM).

2.  The composite semipermeable membrane according to claim 1, wherein the polyamide-based resin contains a constituent derived from m-phenylenediamine.

3.  The composite semipermeable membrane according to claim 1, wherein in the separation functional layer, a ratio: R=Ra1/Ra2 of the surface roughness Ra1 to a surface roughness Ra2 when the area of 5 μm × 5 μm is measured by the atomic force microscope (AFM) in the atmosphere is 1.6 or more.

4.  The composite semipermeable membrane according to claim 1, wherein a rejection of atrazine is 95.0% or more.

5.  The composite semipermeable membrane according to claim 4, having a water permeability of 9.0 LMH/bar or more when evaluated using model water simulated with river water.

6.  A spiral membrane element comprising the composite semipermeable membrane according to any one of claims 1 to 5.

[Fig.1]

Air

1a
1b
} 1

Water

1a
1b
} 1

EP 4 631 607 A1

[Fig.2]

14

# EP 4 631 607 A1

## INTERNATIONAL SEARCH REPORT

International application No.

**PCT/JP2023/028734**

| A. | CLASSIFICATION OF SUBJECT MATTER |
|---|---|

***B01D 63/10***(2006.01)i; ***B01D 69/00***(2006.01)i; ***B01D 69/10***(2006.01)i; ***B01D 69/12***(2006.01)i; ***B01D 71/56***(2006.01)i; ***B32B 3/24***(2006.01)i; ***C02F 1/44***(2023.01)i

FI: B01D69/12; B01D63/10; B01D69/10; B01D69/00; B01D71/56; C02F1/44 A; B32B3/24 Z

According to International Patent Classification (IPC) or to both national classification and IPC

| B. | FIELDS SEARCHED |
|---|---|

Minimum documentation searched (classification system followed by classification symbols)

B01D63/10; B01D69/00; B01D69/10; B01D69/12; B01D71/56; B32B3/24; C02F1/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 9-271647 A (NITTO DENKO CORP) 21 October 1997 (1997-10-21) claims, paragraphs [0005], [0012], [0019], [0026], [0028]-[0044], [0046]-[0068] | 1-6 |
| Y | | 6 |
| X | JP 9-85068 A (NITTO DENKO CORP) 31 March 1997 (1997-03-31) claims, paragraphs [0005], [0015], [0028]-[0056], [0082]-[0111] | 1-5 |
| Y | | 6 |
| X | JP 10-137563 A (NITTO DENKO CORP) 26 May 1998 (1998-05-26) claims, paragraphs [0001], [0009]-[0029] | 1-5 |
| Y | | 6 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**15**

EP 4 631 607 A1

## INTERNATIONAL SEARCH REPORT
### Information on patent family members

International application No.

**PCT/JP2023/028734**

| Patent document cited in search report | | | Publication date (day/month/year) | Patent family member(s) | Publication date (day/month/year) |
|---|---|---|---|---|---|
| JP | 9-271647 | A | 21 October 1997 | US 6171497 B1 claims, column 2, lines 8-14, column 3, lines 60-65, column 4, lines 39-46, column 5, lines 18-39, column 6, line 4 to column 8, line 42, column 9, line 10 to column 12, line 14 EP 787525 A1 CN 1163793 A | |
| JP | 9-85068 | A | 31 March 1997 | US 5614099 A claims, column 2, lines 19-26, column 3, lines 40-45, column 5, line 16 to column 8, line 51, column 13, line 52 to column 17, line 53 EP 718030 A2 | |
| JP | 10-137563 | A | 26 May 1998 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9085068 A
- JP S5824303 A
- JP H01180208 A
- JP H0985068 A
- JP H078770 A